# EUROPÄISCHE PATENTSCHRIFT

(11) **EP 4 382 744 B1**
(45) Veröffentlichungstag und Bekanntmachung des Hinweises auf die Patenterteilung: **22.10.2025**
(21) Anmeldenummer: 22212585.8
(22) Anmeldetag: 09.12.2022
(51) Int. Cl.: F03D 13/10, F03D 80/80

(54) **GONDEL EINER WINDENERGIEANLAGE, UND VERFAHREN ZUR INSTALLATION**
NACELLE OF A WIND TURBINE, AND METHOD FOR INSTALLATION
NACELLE D'ÉOLIENNE ET PROCÉDÉ D'INSTALLATION

(43) Veröffentlichungstag der Anmeldung: 12.06.2024
(73) Patentinhaber: Wobben Properties GmbH, 26607 Aurich (DE)
(72) Erfinder: Gerdes, Frank, 26629 Großefehn (DE); van der Sluis, Hannes, 7201 AJ ZUTHPEN (NL); Fellensiek, Jens, 26180 Rastede (DE)
(74) Vertreter: Eisenführ Speiser

(56) Entgegenhaltungen:
- EP-A1- 2 604 570
- EP-A1- 3 702 616
- EP-A1- 4 074 964

## Beschreibung

Die vorliegende Erfindung betrifft eine Gondel einer Windenergieanlage, die dazu eingerichtet ist, auf einem Turm der Windenergieanlage installiert zu werden, wobei die Gondel einen Anlagentransformator aufweist, der dazu eingerichtet ist, eine von der Windenergieanlage erzeugte elektrische Leistung für eine Einspeisung in ein Mittelspannungsnetz zu transformieren, und eine elektrische Schnittstelle zum Anschluss wenigstens einer Mittelspannungsleitung aufweist, wobei die Leitung durch den Turm der Windenergieanlage in die Gondel hinein verläuft, eine in der Gondel installierte Zugeinrichtung mit einem Zugmittel aufweist, das dazu eingerichtet ist, die Leitung zum Anschluss an die elektrische Schnittstelle in die Gondel hinein zu ziehen, und eine in der Gondel installierte Stützstruktur aufweist, die einen Aufnahmebereich für das Zugmittel bzw. die Leitung aufweist und dazu eingerichtet ist, die Leitung in den Aufnahmebereich in einem vorbestimmten Biegeradius zu halten.

Windenergieanlagen der vorstehend bezeichneten Art sind allgemein bekannt. Es existieren am Markt verschiedene Anlagenkonzepte, umfassend sowohl Windenergieanlagen mit Getriebe als auch getriebelose Windenergieanlagen, bei denen die Umdrehungsbewegung der Rotorblätter der Windenergieanlage direkt in eine Bewegung eines Rotors eines Generators umgesetzt werden, der eine elektrische Leistung erzeugt. Im Zuge des zunehmenden Wettbewerbs auf dem Gebiet der Windenergieanlagen, und mit Blick auf die zunehmenden Herausforderungen im Lichte nationaler Gesetzgebungen sind die Windenergieanlagenhersteller bestrebt, die Gestehungskosten für den mit den Windenergieanlagen erzeugten Strom zu senken, was unter anderem auch eine Reduktion der Herstellkosten für die Windenergieanlage betrifft.

Windenergieanlagen werden häufig in Anordnungen, sogenannten Parks, betrieben, bei denen mehrere Windenergieanlagen die von ihnen erzeugte elektrische Leistung in ein Mittelspannungsnetz, d. h. beispielsweise ein Windparknetz, einspeisen, von wo aus dann eine Weiterverteilung in das Stromnetz bzw. Versorgungsnetz erfolgt.

Die Anmelderin hat ein Windenergieanlagenkonzept vorgestellt, bei dem zum Senken der Stromgestehungskosten der Anlagentransformator, welcher die von der Windenergieanlage erzeugte Leistung in eine Mittelspannung, d. h. eine Spannung für das Mittelspannungsnetz bzw. Windparknetz, transformiert, vom Fuß der Windenergieanlage in die Gondel der Windenergieanlage verlegt wird. Der Aufwand zur Installation von Niederspannungsleitungen zwischen dem Generator der Windenergieanlage und dem Anlagentransformator wird hierdurch signifikant reduziert. Anstelle einer Vielzahl von Niederspannungsleitungen muss so nur noch eine einzige Leitung, nämlich die Mittelspannungsleitung, vom Anlagentransformator durch den Turm der Windenergieanlage verlegt werden.

Die Installation der Mittelspannungsleitung ist in der Praxis herausfordernd, weil im Vergleich zu Niederspannungsleitungen das Eigengewicht der Mittelspannungsleitung deutlich höher ist, nämlich meistens in einem Bereich von 9 kg/m oder höher liegt, und die Mittelspannungsleitung weniger stark auf Biegung beansprucht werden kann als Niederspannungsleitungen. Deshalb wird die Mittelspannungsleitung in der Stützstruktur in einem vorbestimmten Biegeradius. Ein Beispiel aus dem Stand der Technik ist aus EP2604570A1 bekannt.

Es lag der Erfindung die Aufgabe zugrunde, eine Gondel der vorbezeichneten Art dahingehend zu verbessern, dass die Stromgestehungskosten bei der Errichtung der Windenergieanlage reduziert werden können, ohne die Leistungsfähigkeit der Windenergieanlage zu kompromittieren.

Die Erfindung löst die ihr zugrundeliegende Aufgabe, indem sie eine Gondel gemäß Anspruch 1 vorschlägt. Insbesondere schlägt die Erfindung vor, dass die Stützstruktur der Gondel eine Anzahl an Rollen aufweist, welche zwischen einer vorgerückten ersten Stellung und einer zurückgezogenen zweiten Stellung hin- und herbewegbar an der Stützstruktur montiert sind, wobei sich die Anzahl an Rollen in der ersten Stellung weiter in den Aufnahmebereich hinein erstreckt als in der zweiten Stellung.

Eine "Anzahl an Rollen" umfasst erfindungsgemäß sowohl eine Rolle als auch mehrere Rollen.

Insofern im Zusammenhang mit der Erfindung von einem Mittelspannungsnetz oder einer Mittelspannung die Rede ist, so ist hierunter eine Spannung in einem niedrigen bis mittleren zweistelligen kV-Bereich zu verstehen, beispielsweise in einem Bereich von 10 kV bis 50 kV. Die Ober- und Untergrenzen schwanken je nach nationalen Definitionen geringfügig, die Bezeichnung der Mittelspannung ist insoweit auch eher funktional auf die Hierarchieebene des Spannungsnetzes gerichtet, die sich auf einem mittleren Niveau zwischen der Spannung der erzeugten elektrischen Leistung einerseits (Niederspannungsniveau) und dem Spannungsniveau des Versorgungsnetzes andererseits (Hochspannungsniveau) bewegt.

Die Erfindung beruht auf der Erkenntnis, dass im Stand der Technik ein wesentlicher Zeitbedarf bei der Installation der Mittelspannungsleitung in der Gondel der Windenergieanlage darauf verwandt werden musste, die Mittelspannungsleitung mit einem dedizierten Betriebsmittel, einer sogenannten Kabelumlenkung bzw. Kabeleckrolle, in die Gondel hineinzuziehen und von der vertikalen Ausrichtung im Turm zu einer horizontalen Ausrichtung in der Gondel umzubiegen, damit der Anschluss an die elektrische Schnittstelle des Anlagentransformators vorgenommen werden kann. Da das Betriebsmittel, welches im Stand der Technik verwendet wurde, aus Kosten- und Platzgründen nicht zum Verbleib in der Anlage geeignet und ausgelegt war, musste die Mittelspannungsleitung daher nach dem Hineinziehen in die Gondel bislang stets von dem Betriebsmittel in den Aufnahmebereich der Stützstruktur umgelegt werden, was bei dem beträchtlichen Gewicht der Mittelspannungsleitung auf Höhe der Gondel, also am oberen Ende eines teilweise 150 m oder höher bauenden Turmes, einen beträchtlichen Kraft- und Zeitaufwand bedeutete.

Hier setzt die Erfindung an, indem sie die fest installierte Stützstruktur der Gondel selbst zum Installieren der Mittelspannungsleitung verwendet. Die Stützstruktur wird durch das Bewegen der Anzahl an Rollen in die erste Stellung in einen Zustand versetzt, in dem die Mittelspannungsleitung mit geringem Kraftaufwand über die Rollen durch den Aufnahmebereich der Stützstruktur hindurchgezogen werden kann. Je weiter die Anzahl an Rollen in den Aufnahmebereich vorgerückt wird, desto stärker ist der Effekt des Abhebens des Zugmittels bzw. der Mittelspannungsleitung von der Stützstruktur und desto größer ist die Kraftersparnis beim Heraufziehen in der Mittelspannungsleitung in die Gondel durch den Turm.

Werden die Rollen sodann nach erfolgtem Heraufziehen der Mittelspannungsleitung in die zweite Stellung zurückbewegt, erstrecken sich die Rollen weniger weit in den Aufnahmebereich hinein als zuvor, vorzugsweise gar nicht mehr im Aufnahmebereich, und ein partielles oder vorzugsweise vollständiges Anlegen der Mittelspannungsleitung an die Stützstruktur kann erfolgen, wodurch eine Haltewirkung der Stützstruktur aufgenommen werden kann.

Der Installationsaufwand wird zeitlich gesehen hierdurch signifikant verkürzt.

Die Anzahl an Rollen kann ebenfalls ab Werk bereits an der Stützstruktur installiert sein. Die Rollen können aber auch als "Miniatur-Betriebsmittel" separat vorgehalten und erst am Aufstellort an der Stützstruktur installiert werden. Betriebsmittel wie die aus dem Stand der Technik bekannten Kabeleckrollen sind gemäß der Erfindung vollständig entbehrlich.

In einer bevorzugten Ausführungsform weist der Aufnahmebereich der Stützstruktur einen Bogenabschnitt auf, der sich über einen Winkelbereich von 60° oder mehr erstreckt, vorzugsweise 75° oder mehr, oder besonders bevorzugt 90° oder mehr überspannt.

In einer weiteren bevorzugten Ausführungsform weist die Stützstruktur eine Auflagefläche für die Leitung auf.

Je weiter sich die Anzahl an Rollen in den Aufnahmebereich herein erstreckt, desto weniger von der Auflagefläche wird von der Mittelspannungsleitung bzw. zuvor von dem Zugmittel kontaktiert, und desto geringer ist die Reibkraft, die durch die Zugeinrichtung überwunden werden muss. Vorzugsweise weist die Anzahl Rollen eine Mehrzahl Rollen auf, die entlang des Bogenabschnitts verteilt angeordnet sind, vorzugsweise mit gleichmäßigem Abstand zwischen jeweils benachbarten Rollen. Vorzugsweise sind jeweils benachbarte Rollen um einen Bogenwinkel in einem Bereich von 10° bis 30° voneinander beabstandet, weiter vorzugsweise um einen Winkel in einem Bereich von 12° bis 18°. Hierdurch wird eine kraftschonende und auch die Leitung angemessen vor Biegebeanspruchung schützende Umlenkung erzielt.

Weiter vorzugsweise erstreckt sich die Anzahl an Rollen in der ersten Stellung so weit in den Aufnahmebereich hinein, dass die Leitung von der Auflagefläche beabstandet ist.

Weiter vorzugsweise ist die Anzahl an Rollen in der zweiten Stellung so weit aus dem Aufnahmebereich ausgerückt, dass die Anzahl an Rollen von der Leitung beabstandet ist. Im Umkehrschluss bedeutet dies, dass die Mittelspannungsleitung bzw. das Zugmittel in der zweiten Stellung der Rollen vollständig an der Auflagefläche anliegen kann und hierdurch eine Haltewirkung in Folge von Haftreibung gewährleistet ist. Gleichzeitig werden die Rollen mechanisch nicht länger belastet oder können sogar demontiert werden, siehe weiter unten.

In einer weiteren bevorzugten Ausführungsform ist die Anzahl an Rollen mit einer Kulissenführung wirkverbunden, welche die erste und die zweite Stellung, sowie einen Verstellweg zwischen den beiden Positionen definiert. Die Kulissenführung ist vorzugsweise jeweils im Bogenabschnitt der Stützstruktur ausgebildet und dazu eingerichtet, die Anzahl an Rollen in radialer Richtung zwischen der ersten Stellung und der zweiten Stellung hin- und herzuführen. Bei mehreren Rollen weist in diesem Sinne jede Rolle vorzugsweise eine eigene Kulissenführung auf.

Vorzugsweise weist die Kulissenführung zusätzlich eine Kippsicherung in Form mehrerer seitlich neben der Kulisse angeordneter Führungsstifte auf, die dazu eingerichtet sind, ein Verkanten der Rollen zu unterbinden.

In einer weiteren bevorzugten Ausführungsform ist die Auflagefläche aus mehreren voneinander beabstandeten Flächensegmenten gebildet. Die Auflagefläche kann beispielsweise durch mehrere Ausnehmungen unterbrochen sein, in denen sich die bewegbare Anzahl an Rollen befindet, wobei in jeder Ausnehmung vorzugsweise jeweils eine Rolle angeordnet ist. Ein, mehrere oder sämtliche Flächensegmente weisen vorzugsweise ein die Reibwirkung erhöhendes Reibmaterial auf. Das Reibmaterial ist vorzugsweise als Gummiauflage ausgebildet und auf dem Flächensegment befestigt, etwa verklebt.

In einer weiteren bevorzugten Ausführungsform weist die Zugeinrichtung eine Winde auf, vorzugsweise eine Seildurchlaufwinde oder alternativ eine Trommelwinde, und das Zugmittel weist ein Windenseil auf, beispielsweise in Form eines Stahlseils. Die Zugeinrichtung kann in bevorzugten Ausgestaltungen entweder ab Werk bereits in der Gondel installiert werden, oder, so wie auch die Anzahl an Rollen, erst am Ort der Errichtung der Windenergieanlage in der Gondel montiert werden. Nach vollendeter Installation der Mittelspannungsleitung in der Gondel kann die Zugeinrichtung dann beispielsweise in bevorzugten Ausgestaltungen aus der Gondel entfernt werden und für eine nächste Errichtung an einem anderen Errichtungsort wiederverwendet werden. Bei Verwendung einer Seildurchlaufwinde wird das Windenseil vorzugsweise während eines Hub- und Ablassvorganges durch eine Gondelluke im mittleren Gondelbereich nach außen geleitet bzw. geführt. So wird gewährleistet, dass das Windenseil sauber, d.h. störungsfrei läuft und weder Schaden nimmt noch verursacht.

In einer weiteren bevorzugten Ausführungsform ist die Anzahl an Rollen reversibel lösbar an der Stützstruktur montiert. Dies ermöglicht eine Wiederverwendung der Anzahl an Rollen, die nach nur einmaliger Installation einer Mittelspannungsleitung in der Gondel der Windenergieanlage in der Regel noch nicht nennenswert verschlissen sind, und daher eine große Anzahl an Installationsvorgängen unterstützen können. Vorzugsweise ist die Anzahl an Rollen derart an der Stützstruktur angeordnet, dass die Rollen von der Anlage entfernt werden können, wenn sich diese in der zweiten, zurückgezogenen Stellung befinden.

In einer weiteren bevorzugten Ausführungsform weist die Stützstruktur eine Aufnahme für eine Kabelhalterung auf. Vorzugsweise weist hierzu die Stützstruktur ein turmseitiges erstes Ende auf und ein schnittstellenseitiges zweites Ende, wobei die Aufnahme für die Kabelhalterung an dem zweiten Ende angeordnet ist.

Bei einem Abstand zwischen dem zweiten Ende der Stützstruktur und dem nächstkommenden Kabelhalteelement im Turm von 15 bis 18 m in vertikaler Richtung würde dies einer Gewichtskraft desjenigen Teils der Mittelspannungsleitung von 150 bis 180 kg entsprechen, wenn ein Kabelgewicht von 10 kg/m zugrunde gelegt wird. Ein Teil dieser Gewichtskraft würde aber nicht von der Kabelhalterung aufgenommen werden müssen, sondern würde bei entsprechender Anordnung der Kabelhalterung am zweiten Ende bereits von der Stützstruktur mit aufgenommen werden, insbesondere von deren Auflagefläche, wenn sich die Rollen in der zurückgezogenen zweiten Stellung befinden. Dies ermöglicht die Verwendung einer mechanisch einfachen Kabelhalterung mit kleinen Dimensionen. Zudem können die bei einer Azimutbewegung der Gondel im Kabel entstehenden Torsionen von der Stützstruktur aufgenommen werden.

Vorzugsweise wird etwa eine Kabelhalterung verwendet, wie sie in WO 2020/224909 A1 gezeigt wird.

Weiter vorzugsweise werden mehrere Kabelhaltungen verwendet, die entlang der Stützstruktur verteilt angeordnet und an der Stützstruktur befestigt sind. Die Kabelhalterungen werden vorzugsweise beabstandet zu den Rollen angeordnet. Dadurch wird die Einleitung und Verteilung des Kabelgewichts in die Stützstruktur verbessert.

Besonders bevorzugt werden im Bereich des zweiten - also oberen - Endes mehrere Kabelhalterungen angeordnet. Eine im Wesentlichen horizontale Ausrichtung der Kabelhalterungen wirkt sich vorteilhaft auf die Tragkraft der Kabelhalterungen aus.

Die Erfindung ist vorstehend in einem ersten Aspekt unter Bezugnahme auf die Gondel selbst beschrieben worden.

In einem zweiten Aspekt betrifft die Erfindung ferner ein Verfahren zur Verlegung einer spannungsführenden Leitung in eine Gondel einer Windenergieanlage hinein, wobei die Gondel nach einer der vorstehend beschriebenen bevorzugten Ausführungsform ausgebildet und auf einem Turm der Windenergieanlage installiert ist.

Die Erfindung löst bezüglich dieses Verfahrens die eingangs bezeichnete Aufgabe, indem das Verfahren die folgende Schritte aufweist:
- Bewegen der Anzahl von Rollen in die vorgerückte erste Stellung,
- Absenken des Zugmittels, wobei das Zugmittel in dem Aufnahmebereich geführt wird und über die Anzahl von Rollen läuft,
- Verbinden des Zugmittels mit der spannungsführenden Leitung in einem Bereich außerhalb der Gondel, insbesondere unterhalb der Gondel, vorzugsweise innerhalb des Turms,
- Ziehen der spannungsführenden Leitung mittels des Zugmittels in die Gondel hinein, wobei die Leitung von der ersten Erstreckungsrichtung in die zweite Erstreckungsrichtung in dem vorbestimmten Biegeradius umgebogen wird,
- Bewegen der Anzahl von Rollen in die zweite, zurückgezogene Position, wobei die Leitung im umgebogenen Zustand gehalten wird, und
- Verbinden der spannungsführenden Leitung mit der elektrischen Schnittstelle.

Die Erfindung macht sich hinsichtlich des Verfahrens dieselben Vorteile und Erwägungen zunutze wie die erfindungsgemäße Gondel. Bevorzugte Ausführungen der erfindungsgemäßen Gondel sind zugleich bevorzugte Ausführungsformen des Verfahrens und umgekehrt, weswegen zur Vermeidung von Wiederholungen auf die obigen Ausführungen verwiesen wird.

Das Verfahren wird vorteilhaft weitergebildet, indem es zusätzlich die Schritte umfasst:
- Anbringen der Anzahl von Rollen an der Stützstruktur vor dem Absenken des Zugmittels, insbesondere vor dem Bewegen der Anzahl von Rollen in die erste Stellung, und/oder
- Abnehmen der Anzahl von Rollen von der Stützstruktur nach dem Hineinziehen der Leitung in die Gondel, insbesondere nach dem Bewegen der Anzahl von Rollen in die zweite Stellung.

Die Erfindung wird nachfolgend unter Bezugnahme auf die beigefügten Figuren anhand eines bevorzugten Ausführungsbeispiels näher beschrieben. Hierbei zeigen:
- Fig. 1: eine schematische räumliche Ansicht einer Windenergieanlage gemäß dem bevorzugten Ausführungsbeispiel,
- Fig. 2: eine schematische Querschnittsansicht durch eine Gondel der Windenergieanlage gemäß Fig. 1,
- Fig. 3: eine Detailansicht einer Stützstruktur der Gondel gemäß den Figuren 1 und 2,
- Fig. 4: eine weitere Detailansicht der Stützstruktur gemäß Fig. 3,
- Fig. 5: eine weitere Detailansicht der Stützstruktur gemäß Fig. 3 und 4, und
- Fig. 6: eine Innenansicht der Gondel gemäß Fig. 1 bis 5.

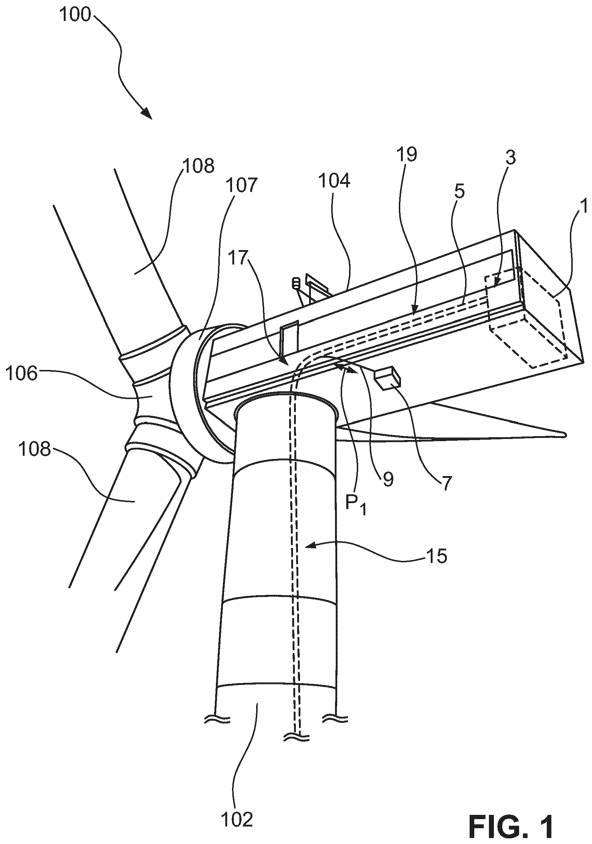

In Fig. 1 ist eine Windenergieanlage 100 gezeigt. Die Windenergieanlage 100 weist einen Turm 102 auf, auf dem eine Gondel 104 oberseitig angeordnet ist. An der Gondel 104 ist eine drehbar gelagerte Nabe 106 mit einer Anzahl an Rotorblättern 108 angeordnet, die zur Erzeugung einer elektrischen Leistung einen Generator 107 antreiben.

In der Gondel 104 ist ein Anlagentransformator 1 angeordnet. Der Anlagentransformator 1 befindet sich auf einer relativ zur Turmachse von der Nabe 106 abgewandten Seite der Gondel 104.

Der Anlagentransformator 1 wiest eine elektrische Schnittstelle 3 auf, welche zur Verbindung mit einer Mittelspannungs-Leitung 5 (im Folgenden: Leitung 5) eingerichtet ist. Die Leitung 5 ist gestrichelt angedeutet.

### Geänderte Beschreibungsseite (Reinschrift)

In der Gondel 104 ist ferner eine Zugeinrichtung 7 installiert, die ein Zugmittel 9 aufweist, welches in Richtung des Pfeils P₁ ein- und ausziehbar ist, um durch den Turm 102 hinabgelassen und heraufgezogen zu werden, um die Leitung 5 in der Gondel 104 installieren zu können.

Die Leitung 5 weist einen ersten Leitungsabschnitt 15 auf, der im Wesentlichen parallel zum Turm 102, also im Wesentlichen vertikal, ausgerichtet ist, sowie einen Umlenkungsabschnitt 17, in dem die Leitung 5 gebogen werden muss. Schließlich weist die Leitung 5 an ihrem transformatorseitigen Ende einen dritten Abschnitt 19 auf, der im Wesentlichen horizontal ausgerichtet ist, und sich beispielsweise entlang der Decke der Gondel 104 erstrecken kann.

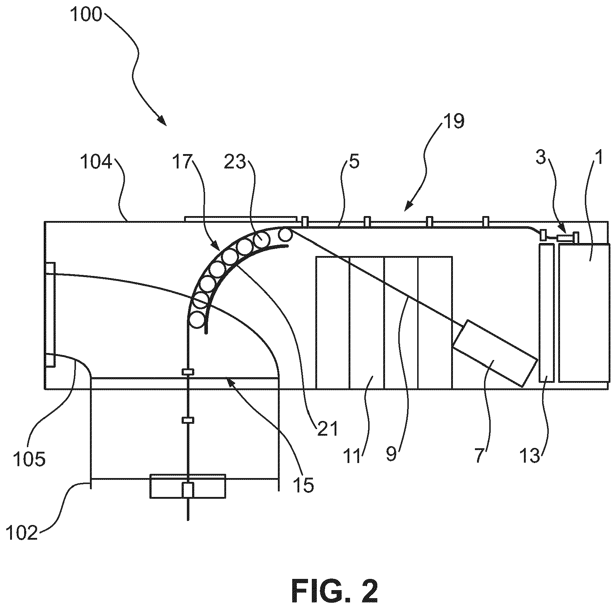

Der schematische Aufbau der inneren Struktur der Gondel 104 ist in Fig. 2 näher gezeigt. Vom Turm 102 der Windenergieanlage 100 erstreckt sich ein Maschinenträger 105, an dem auch die Nabe 106 bzw. der Generator 107 befestigt werden. In eine von der Nabenseite abgewandte Richtung erstreckt sich die Leitung 5 bis zum Anlagentransformator 1, an den sie über die elektrische Schnittstelle 3 angeschlossen ist. Im Umlenkungsabschnitt 17 befindet sich eine Stützstruktur 21, die fest in der Gondel 104 installiert ist und eine Anzahl von Rollen 23, nämlich eine Mehrzahl Rollen 23, aufweist, auf deren Funktionsweise in den folgenden Figuren näher eingegangen wird. Ferner ist in der Gondel 104 eine Anzahl Steuerschränke 11 angeordnet, und eine Niederspannungs-Verteilerstruktur 13.

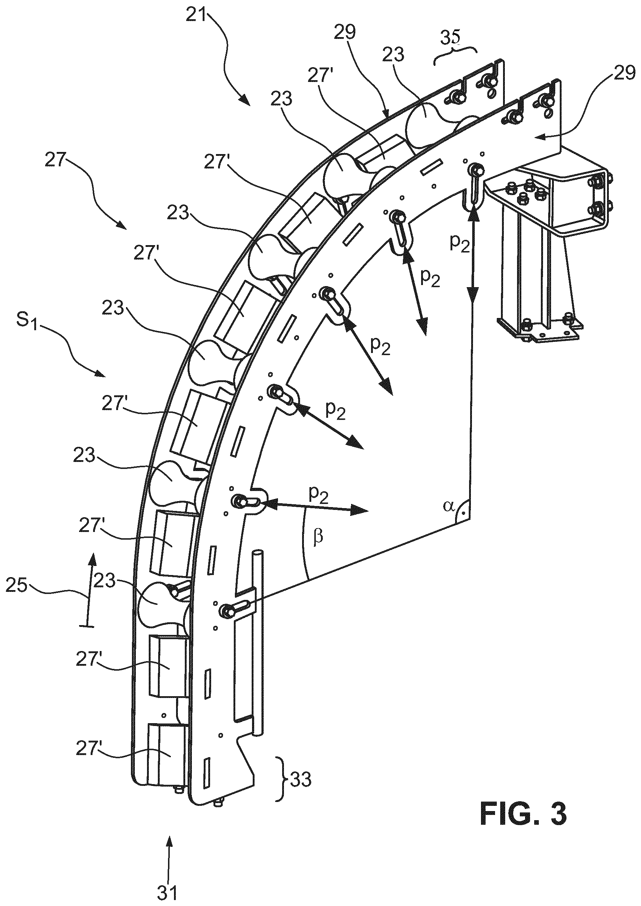

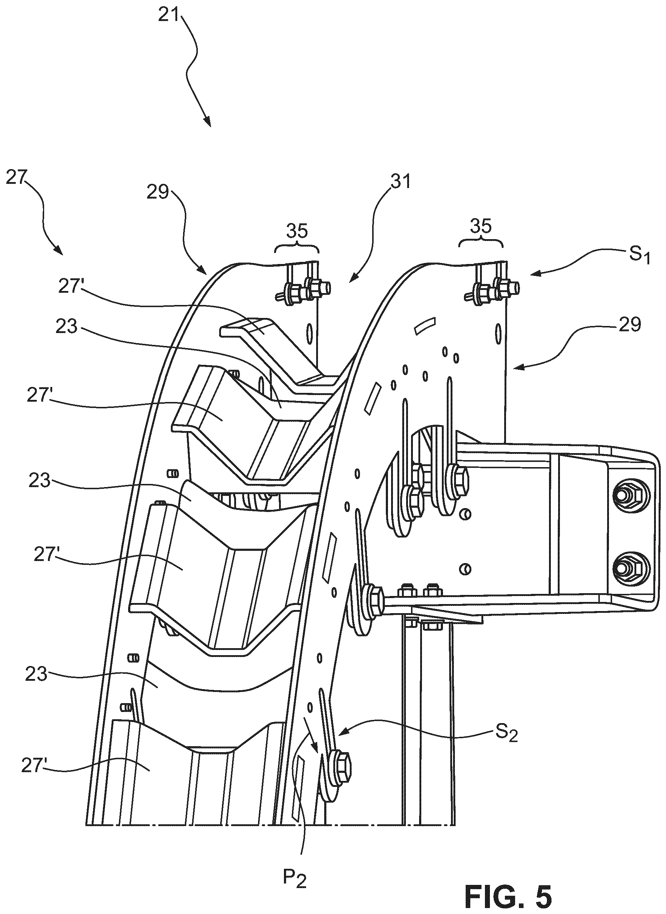

Die bogenförmige Stützstruktur 21 ist in Fig. 3 näher gezeigt. Die Rollen 23 der Stützstruktur 21 sind in einem bogenförmigen Abschnitt 25 angeordnet, der sich über einen Winkelbereich von α = 90° erstreckt. Es sind insgesamt sechs Rollen 23 vorgesehen. Die Rollen 23 sind zueinander jeweils in einem Winkel β beabstandet, welcher vorzugsweise in einem Bereich zwischen 12° und 18° liegt. Jede der Rollen 23 ist radial in Richtung der Pfeile P₂ zwischen einer in Fig. 3 gezeigten vorgerückten ersten Stellung S₁ und einer in Fig. 5 gezeigten zurückgezogenen Stellung S₂ bewegbar.

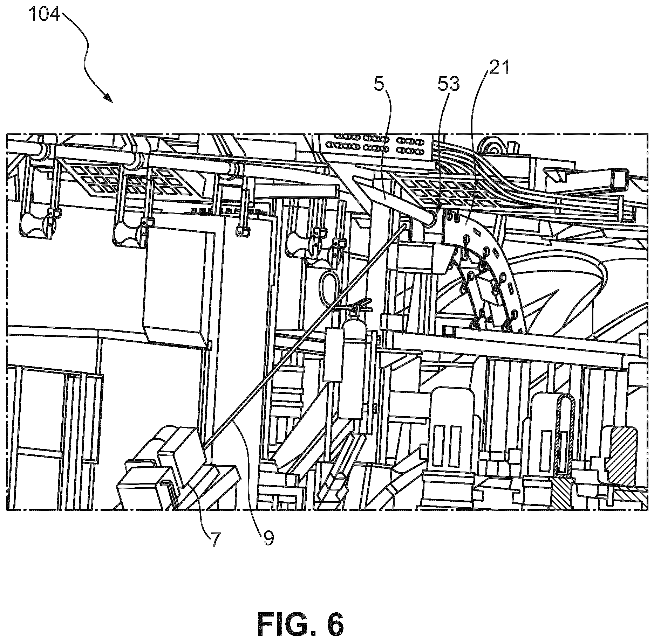

Die Stützstruktur 21 weist ein erstes, turmseitiges Ende 33 auf sowie ein gegenüberliegend angeordnetes schnittstellenseitiges zweites Ende 35, wobei das zweite Ende 35 zur Aufnahme einer Kabelhalterung eingerichtet ist, die in Fig. 6 näher gezeigt ist.

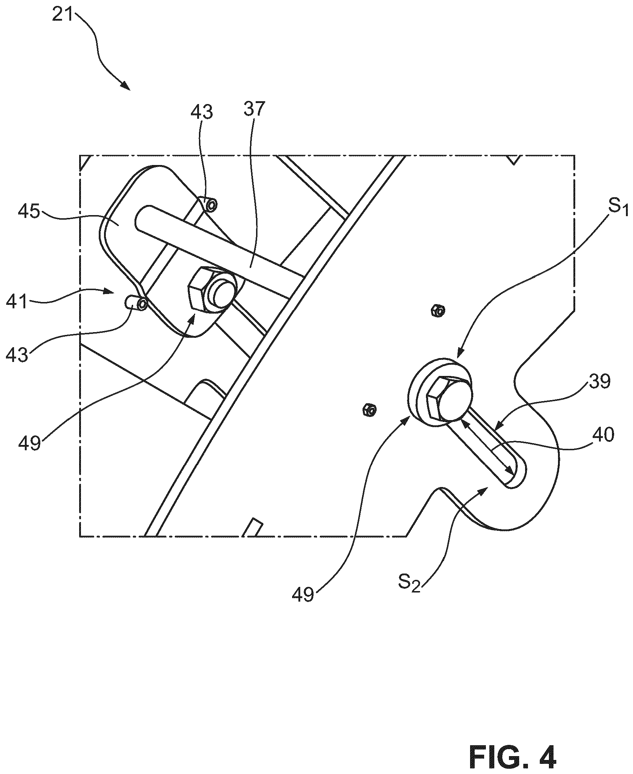

Fig. 4 zeigt die Mechanik einer der Rollen 23, die in Fig. 4 ausgeblendet sind, in der Stützstruktur 21. Jede der Rollen 23 ist um eine Achse 37 drehbar gelagert und in einer Kulissenführung 39 zwischen der gezeigten ersten Stellung S₁ und einer zweiten Stellung S₂ (vgl. Fig. 5) bewegbar. Die Kulissenführung 39 definiert hierbei einen Verstellweg 40 zwischen der ersten Stellung S₁ und der zweiten Stellung S₂. Im gezeigten Ausführungsbeispiel verläuft der Verstellweg der Kulissenführung 39 in radialer Richtung, in Richtung der Pfeile P.

Die Kulissenführung 39 ist zusätzlich mit einer Kippsicherung 41 versehen, die ein seitliches Verkanten der Achse 37 vermeiden soll. Die Kippsicherung 41 weist zwei seitliche Stifte 43 auf, die gegenüberliegend an einer verschiebbaren Platte 45 angreifen, welche die Achse 37 an beiden Seiten der Stützstruktur 21 abstützt. Eine Arretierung der Rollen 23 in der ersten Stellung S₁ oder der zweiten Stellung S₂ kann beispielsweise mittels endseitig angebrachter Verschraubungen 49 realisiert werden.

Die Rollen 23 können mitsamt der Achse 37 durch Entfernen der Verschraubungen 49, vorzugsweise in der zweiten Stellung S₂, auch von der Stützstruktur 21 entfernt werden, um sie nach erfolgter Installation der Leitung 5 bei einer Windenergieanlage erneut zum Einsatz zu bringen. Der Aufwand des Entfernens der Rollen 23 ist gering, und auch der Transportaufwand, die Rollen zur nächsten Windenergieanlage zu bringen, steht in einem sehr günstigen Verhältnis zu den aus dem Stand der Technik bekannten Kabeleckrollen.

Wie sich aus Fig. 5 gut erkennen lässt, sind die Rollen 23 an der Stützstruktur 21 in der zweiten Stellung S₂ so weit aus dem Aufnahmebereich 31 ausgerückt, dass eine Leitung 5, wenn sie in dem Aufnahmebereich 31 verlegt wäre, die Rollen 23 nicht mehr berühren würde, sondern ausschließlich auf den Flächensegmenten 27' der Auflagefläche 27 aufläge. Wird dann in dem schnittstellenseitigen Ende 35 in der dafür vorgesehenen Aufnahme 51 eine Kabelhalterung 53 installiert, trägt die Auflagefläche 27 zum Halten der Leitung 5 mittels Haftreibung zusätzlich bei.

In der in Fig. 6 gezeigten schematischen räumlichen Darstellung ist die Winde 7 noch einmal aus einer anderen Ausrichtung gezeigt. Die Winde 7 ist mit ihrem Zugmittel 9, welches beispielsweise ein Stahlseil ist, nach wie vor mit der Leitung 5 verbunden, um die Anlenkung hervorzuheben. Die Leitung 5 ist allerdings schon in der Gondel 104 installiert und in der Nähe einer Decke der Gondel 104 in Richtung des Anlagentransformators 1 geführt. Der Gesamtinstallationsvorgang kann unter Verwendung der fest in der Windenergieanlage 100 installierten Stützstruktur 21 erfolgen, wobei lediglich die Anzahl an Rollen 23 zu diesem Zweck entweder in die Stützstruktur 21 eingesetzt werden muss oder bereits eingesetzt war und lediglich in die erste Stellung S₁ verbracht werden muss.

Im Betrieb wird bevorzugt das folgende Verfahren ausgeführt:
Zunächst wird in der Gondel 104 die Winde 7 mit ihrem Zugmittel 9 bereitgestellt, entweder ab Werk oder am Errichtungsort. Sodann wird das Zugmittel 9 in den Aufnahmebereich 31 der Stützstruktur 21 eingeführt und durch diesen hindurch im Turm 102 der Windenergieanlage 100 hinabgeführt. Im Fußbereich der Windenergieanlage 100 wird die Leitung 5 an das Zugmittel 9 angebunden und sodann mittels der Winde 7 durch den Turm 102 nach oben in die Gondel 104 hineingezogen. Das Zugmittel 9 und später dann die Leitung 5 werden während des Hinaufziehens in die Gondel 104 in den Aufnahmebereich 31 geführt und laufen hierbei über die Rollen 23, welche sich in der ersten Stellung S₁ befinden.

Ist die Leitung 5 in ausreichendem Maße in die Gondel 104 hineingezogen worden, kann die Leitung 5 mit der elektrischen Schnittstelle 3 des Anlagentransformators 1 verbunden werden.

Danach oder bereits davor können die Rollen 23 aus der ersten Stellung S₁ in die zweite Stellung S₂ zurückgezogen werden, um ein Aufliegen der Leitung 5 auf der Auflagefläche 27 der Stützstruktur 21 zu bewirken, und eine Haltewirkung zu erzielen. Die Haltewirkung wird vorzugsweise erhöht, indem in die Aufnahme 51 eine Kabelhalterung eingesetzt wird, die die Leitung 5 gegen axiales Durchrutschen, insbesondere in Richtung des Turms 102, also der Schwerkraft folgend, verhindert. Nach erfolgter Installation der Leitung 5 können die Rollen 23 entweder in der zweiten Stellung S₂ verbleiben, oder, vorzugsweise aus der Stützstruktur 21 entfernt werden und für eine erneute Verwendung in einer anderen Windenergieanlage vorbereitet werden. Hieraus wird ersichtlich, dass die Erfindung deutliche Vorteile in der Handhabung der Leitung 5 mit sich bringt. Obwohl die Anzahl der Handgriffe, die zum Installieren und Bewegen der Rollen 23 in ihre jeweilige erste Stellung S₁ nötig sind, zunächst als Nachteil erscheinen mag, hat sich doch herausgestellt, dass diese Handhabung aufgrund der Verwendung der ohnehin in der Windenergieanlage notwendigen Stützstruktur 21 deutlich zeit- und kostensparender ist, als ein separates Betriebsmittel in Form einer Kabeleckrolle zu verwenden, weil der kraft- und zeitaufwändige Umlegevorgang der Leitung 5 von einem solchen Betriebsmittel auf die Stützstruktur vollständig entfallen kann.

### Bezugszeichenliste

- 1: Anlagentransformator
- 3: Schnittstelle
- 5: Leitung
- 7: Winde
- 9: Zugmittel
- 11: Steuerschrank
- 13: Niederspannungs-Verteilerstruktur
- 15: Leitungsabschnitt
- 17: Umlenkungsabschnitt
- 19: dritter Abschnitt
- 21: Stützstruktur
- 23: Rollen
- 25: Bogenabschnitt
- 27: Auflagefläche
- 27': Flächensegment
- 31: Aufnahmebereich
- 33: erstes Ende
- 35: zweites Ende
- 37: Achse
- 39: Kulissenführung
- 40: Verstellweg
- 41: Kippsicherung
- 43: Stift
- 45: Platte
- 49: Verschraubung
- 51: Aufnahme
- 53: Kabelhalterung
- 100: Windenergieanlage
- 102: Turm
- 104: Gondel
- 105: Maschinenträger
- 106: Nabe
- 107: Generator
- 108: Rotorblatt
- P₁, P₂: Pfeil
- S₁: erste Stellung
- S₂: zweite Stellung
- α: Winkel
- β: Winkel

## Patentansprüche

1. Gondel (104) einer Windenergieanlage (100), die dazu eingerichtet ist, auf einem Turm (102) der Windenergieanlage (100) installiert zu werden, wobei die Gondel (104)
einen Anlagentransformator (1) aufweist, der dazu eingerichtet ist, eine von der Windenergieanlage (100) erzeugte elektrische Leistung für eine Einspeisung in ein Mittelspannungsnetz zu transformieren, und eine elektrische Schnittstelle (3) zum Anschluss wenigstens einer Mittelspannungs-Leitung (5) aufweist, wobei die Leitung (5) durch den Turm (102) der Windenergieanlage (100) in die Gondel (104) hinein verläuft,
eine in der Gondel (104) installierte Zugeinrichtung (7) mit einem Zugmittel (9) aufweist, das dazu eingerichtet ist, die Leitung (5) zum Anschluss an die elektrische Schnittstelle (3) in die Gondel (104) hinein zu ziehen, und
eine in der Gondel (104) installierte Stützstruktur (21) aufweist, die einen Aufnahmebereich (31) für das Zugmittel (9) bzw. die Leitung (5) aufweist und dazu eingerichtet ist, die Leitung (5) in dem Aufnahmebereich (31) in einem vorbestimmten Biegeradius zu halten,
**dadurch gekennzeichnet, dass** die Stützstruktur (21) eine Anzahl an Rollen (23) aufweist, welche zwischen einer vorgerückten ersten Stellung (S1) und einer zurückgezogenen zweiten Stellung (S2) hin- und her bewegbar an der Stützstruktur (21) montiert ist, wobei sich die Anzahl an Rollen (23) in der ersten Stellung (S1) weiter in den Aufnahmebereich (31) hinein erstreckt als in der zweiten Stellung (S2).

2. Gondel (104) nach Anspruch 1,
**dadurch gekennzeichnet, dass** der Aufnahmebereich (31) einen Bogenabschnitt (25) aufweist, der sich über einen Winkelbereich von 60° oder mehr erstreckt, vorzugsweise 75° oder mehr, besonders bevorzugt 90° oder mehr.

3. Gondel (104) nach einem der vorstehenden Ansprüche,
**dadurch gekennzeichnet, dass** die Stützstruktur (21) eine Auflagefläche (27) für die Leitung (5) aufweist.

4. Gondel (104) nach einem der vorstehenden Ansprüche,
**dadurch gekennzeichnet, dass** die Anzahl Rollen (23) eine Mehrzahl Rollen (23) aufweist, die entlang des Bogenabschnitts (25) verteilt angeordnet sind, vorzugsweise mit gleichmäßigem Abstand zwischen jeweils benachbarten Rollen (23).

5. Gondel (104) nach Anspruch 3 oder 4,
**dadurch gekennzeichnet, dass** die Anzahl Rollen (23) sich in der ersten Stellung (S1) so weit in den Aufnahmebereich (31) hinein erstreckt, dass die Leitung (5) von der Auflagefläche (27) beabstandet ist.

6. Gondel (104) nach einem der vorstehenden Ansprüche,
**dadurch gekennzeichnet, dass** die Anzahl Rollen (23) in der zweiten Stellung (S2) so weit aus dem Aufnahmebereich (31) ausgerückt ist, dass die Anzahl Rollen (23) von der Leitung (5) beabstandet ist.

7. Gondel (104) nach einem der vorstehenden Ansprüche,
**dadurch gekennzeichnet, dass** die Anzahl an Rollen (23) mit einer Kulissenführung (39) wirkverbunden sind, welche die erste und zweite Stellung (S1, S2), sowie einen Verstellweg (40) zwischen den beiden Stellungen (S1, S2) definiert.

8. Gondel (104) nach Anspruch 7,
wobei die Kulissenführung (39) dazu eingerichtet ist, die Anzahl an Rollen (23) in radialer Richtung zwischen der ersten Stellung (S1) und der zweiten Stellung (S2) hin und her zu führen.

9. Gondel (104) nach einem der vorstehenden Ansprüche,
**dadurch gekennzeichnet, dass** die Auflagefläche (27) aus mehreren voneinander beabstandeten Flächensegmenten (27') gebildet ist.

10. Gondel (104) nach einem der vorstehenden Ansprüche,
**dadurch gekennzeichnet, dass** die Zugeinrichtung (7) eine Winde aufweist, vorzugsweise eine Trommelwinde, und dass das Zugmittel (9) ein Windenseil aufweist.

11. Gondel (104) nach einem der vorstehenden Ansprüche,
**dadurch gekennzeichnet, dass** die Anzahl an Rollen (23) reversibel lösbar an der Stützstruktur (21) montiert ist.

12. Gondel (104) nach einem der vorstehenden Ansprüche,
**dadurch gekennzeichnet, dass** die Stützstruktur (21) eine Aufnahme (51) für eine Kabelhalterung (53) aufweist.

13. Gondel (104) nach Anspruch 12,
**dadurch gekennzeichnet, dass** die Stützstruktur (21) ein turmseitiges erstes Ende und ein schnittstellenseitiges zweites Ende aufweist, und dass die Aufnahme für die Kabelhalterung an dem zweiten Ende angeordnet ist.

14. Verfahren zur Verlegung einer spannungsführenden Leitung (5) in eine Gondel (104) einer Windenergieanlage (100) hinein, wobei die Gondel (104) nach einem der vorstehenden Ansprüche ausgebildet und auf einem Turm (102) der Windenergieanlage (100) installiert ist, das Verfahren umfassend die Schritte:
- Bewegen der Anzahl von Rollen (23) in die vorgerückte erste Stellung (S1),
- Absenken des Zugmittels (9), wobei das Zugmittel (9) in dem Aufnahmebereich (31) geführt wird und über die Anzahl von Rollen (23) läuft,
- Verbinden des Zugmittels (9) mit der spannungsführenden Leitung (5) in einem Bereich außerhalb der Gondel (104), insbesondere unterhalb der Gondel (104), vorzugsweise innerhalb des Turms,
- Ziehen der spannungsführenden Leitung (5) mittels des Zugmittels (9) in die Gondel (104) hinein, wobei die Leitung (5) von der ersten Erstreckungsrichtung in die zweite Erstreckungsrichtung in dem vorbestimmten Biegeradius umgebogen wird,
- Bewegen der Anzahl von Rollen (23) in die zweite, zurückgezogene Position, wobei die Leitung (5) im umgebogenenen Zustand gehalten wird, und
- Verbinden der spannungsführenden Leitung (5) mit der elektrischen Schnittstelle (3).

15. Verfahren nach Anspruch 14, umfassend:
- Anbringen der Anzahl von Rollen (23) an der Stützstruktur (21) vor dem Absenken des Zugmittels (9), insbesondere vor dem Bewegen der Anzahl von Rollen (23) in die erste Stellung, und/oder
- Abnehmen der Anzahl von Rollen (23) von der Stützstruktur (21) nach dem Hineinziehen der Leitung (5) in die Gondel (104), insbesondere nach dem Bewegen der Anzahl von Rollen (23) in die zweite Stellung.

## Claims

1. Nacelle (104) that forms part of a wind power installation (100) and is configured to be installed on a tower (102) of the wind power installation (100), wherein the nacelle (104)
has an installation transformer (1) that is configured to transform electrical power generated by the wind power installation (100) for feeding into a medium-voltage grid, and has an electrical interface (3) for connecting at least one medium-voltage line (5), wherein the line (5) runs through the tower (102) of the wind power installation (100) into the nacelle (104),
has a pulling device (7) that is installed in the nacelle (104) and comprises a pulling means (9), which is configured to pull the line (5) into the nacelle (104) for connection to the electrical interface (3), and
has a supporting structure (21) that is installed in the nacelle (104), has a receiving region (31) for the pulling means (9) or the line (5) and is configured to keep the line (5) within a predetermined bending radius in the receiving region (31),
**characterized in that** the supporting structure (21) has a number of rollers (23) that are mounted on the supporting structure (21) so as to be able to move back and forth between an advanced, first position (S1) and a retracted, second position (S2), wherein, in the first position (S1), the number of rollers (23) extend further into the receiving region (31) than in the second position (S2).

2. Nacelle (104) according to Claim 1,
**characterized in that** the receiving region (31) has a curved portion (25) that extends over an angular range of 60° or more, preferably 75° or more, particularly preferably 90° or more.

3. Nacelle (104) according to either of the preceding claims,
**characterized in that** the supporting structure (21) has a bearing surface (27) for the line (5).

4. Nacelle (104) according to one of the preceding claims,
**characterized in that** the number of rollers (23) have a multiplicity of rollers (23) that are distributed along the curved portion (25), preferably with an even spacing between respectively adjacent rollers (23).

5. Nacelle (104) according to Claim 3 or 4,
**characterized in that**, in the first position (S1), the number of rollers (23) extend into the receiving region (31) to such an extent that the line (5) is spaced apart from the bearing surface (27).

6. Nacelle (104) according to one of the preceding claims,
**characterized in that**, in the second position (S2), the number of rollers (23) are withdrawn from the receiving region (31) to such an extent that the number of rollers (23) are spaced apart from the line (5).

7. Nacelle (104) according to one of the preceding claims,
**characterized in that** the number of rollers (23) are operatively connected to a slot guide (39) that defines the first and second positions (S1, S2) as well as an adjustment path (40) between the two positions (S1, S2).

8. Nacelle (104) according to Claim 7,
wherein the slot guide (39) is configured to guide the number of rollers (23) in a radial direction back and forth between the first position (S1) and the second position (S2).

9. Nacelle (104) according to one of the preceding claims,
**characterized in that** the bearing surface (27) is formed from a plurality of spaced-apart surface segments (27').

10. Nacelle (104) according to one of the preceding claims,
**characterized in that** the pulling device (7) has a winch, preferably a drum winch, and **in that** the pulling means (9) has a winch cable.

11. Nacelle (104) according to one of the preceding claims,
**characterized in that** the number of rollers (23) are mounted in a reversibly releasable manner on the supporting structure (21).

12. Nacelle (104) according to one of the preceding claims,
**characterized in that** the supporting structure (21) has a receptacle (51) for a cable holder (53).

13. Nacelle (104) according to Claim 12,
**characterized in that** the supporting structure (21) has a tower-side, first end and an interface-side, second end, and **in that** the receptacle for the cable holder is arranged at the second end.

14. Method for routing a live line (5) into a nacelle (104) of a wind power installation (100), wherein the nacelle (104) is designed according to one of the preceding claims and installed on a tower (102) of the wind power installation (100), the method comprising the steps of:
- moving the number of rollers (23) into the advanced, first position (S1),
- lowering the pulling means (9), wherein the pulling means (9) is guided in the receiving region (31) and runs over the number of rollers (23),
- connecting the pulling means (9) to the live line (5) in a region outside of the nacelle (104), in particular beneath the nacelle (104), preferably within the tower,
- pulling the live line (5) into the nacelle (104) by way of the pulling means (9), wherein the line (5) is bent from the first direction of extent into the second direction of extent within the predetermined bending radius,
- moving the number of rollers (23) into the retracted, second position, wherein the line (5) is kept in the bent state, and
- connecting the live line (5) to the electrical interface (3).

15. Method according to Claim 14, comprising:
- attaching the number of rollers (23) to the supporting structure (21) before the pulling means (9) has been lowered, in particular before the number of rollers (23) have been moved into the first position, and/or
- removing the number of rollers (23) from the supporting structure (21) after the line (5) has been pulled into the nacelle (104), in particular after the number of rollers (23) have been moved into the second position.

## Revendications

1. Nacelle (104) d'une éolienne (100) qui est configurée pour être installée sur une tour (102) de l'éolienne (100), dans laquelle la nacelle (104)
présente un transformateur d'éolienne (1) qui est configuré pour transformer une puissance électrique générée par l'éolienne (100) pour une injection dans un réseau moyenne tension, et présente une interface électrique (3) pour raccorder au moins une ligne (5) moyenne tension, dans laquelle la ligne (5) passe à travers la tour (102) de l'éolienne (100) dans la nacelle (104),
présente un dispositif de traction (7) installé dans la nacelle (104) avec un moyen de traction (9) qui est configuré pour tirer la ligne (5) dans la nacelle (104) pour la raccorder à l'interface électrique (3), et
présente une structure de support (21), installée dans la nacelle (104), qui présente une zone de réception (31) pour le moyen de traction (9) ou la ligne (5) et est configurée pour maintenir la ligne (5) dans la zone de réception (31) dans un rayon de courbure prédéterminé,
**caractérisée en ce que** la structure de support (21) présente un certain nombre de galets (23), lequel est monté de manière mobile en va-et-vient sur la structure de support (21) entre une première position (51) avancée et une deuxième position (S2) rétractée, dans laquelle le certain nombre de galets (23) s'étend dans la première position (51) plus loin dans la zone de réception (31) que dans la deuxième position (S2).

2. Nacelle (104) selon la revendication 1,
**caractérisée en ce que** la zone de réception (31) présente une section arquée (25) qui s'étend sur une plage angulaire de 60° ou plus, de préférence de 75° ou plus, particulièrement préférentiellement de 90° ou plus.

3. Nacelle (104) selon l'une quelconque des revendications précédentes,
**caractérisée en ce que** la structure de support (21) présente une surface d'appui (27) pour la ligne (5).

4. Nacelle (104) selon l'une quelconque des revendications précédentes,
**caractérisée en ce que** le certain nombre de galets (23) présente une pluralité de galets (23) qui sont disposés répartis le long de la section arquée (25), de préférence à distance égale entre chacun des galets (23) adjacents.

5. Nacelle (104) selon la revendication 3 ou 4,
**caractérisée en ce que** le certain nombre de galets (23) dans la première position (51) s'étend à l'intérieur de la zone de réception (31) à une distance suffisante pour que la ligne (5) soit éloignée de la surface d'appui (27).

6. Nacelle (104) selon l'une quelconque des revendications précédentes,
**caractérisée en ce que** le certain nombre de galets (23) dans la deuxième position (S2) est dégagé de la zone de réception (31) à une distance suffisante pour que le nombre de galets (23) soit éloigné de la ligne (5).

7. Nacelle (104) selon l'une quelconque des revendications précédentes,
**caractérisée en ce que** le certain nombre de galets (23) est en liaison fonctionnelle avec un guide à coulisse (39), lequel définit les première et deuxième positions (S1, S2), ainsi qu'une course de réglage (40) entre les deux positions (S1, S2).

8. Nacelle (104) selon la revendication 7,
dans laquelle le guide à coulisse (39) est configuré pour guider le certain nombre de galets (23) en va-et-vient en direction radiale entre la première position (51) et la deuxième position (S2).

9. Nacelle (104) selon l'une quelconque des revendications précédentes,
**caractérisée en ce que** la surface d'appui (27) est formée de plusieurs segments de surface (27') espacés les uns des autres.

10. Nacelle (104) selon l'une quelconque des revendications précédentes,
**caractérisée en ce que** le dispositif de traction (7) présente un treuil, de préférence un treuil à tambour, et que le moyen de traction (9) présente un câble de treuil.

11. Nacelle (104) selon l'une quelconque des revendications précédentes,
**caractérisée en ce que** le certain nombre de galets (23) est monté de manière démontable de façon réversible sur la structure de support (21).

12. Nacelle (104) selon l'une quelconque des revendications précédentes,
**caractérisée en ce que** la structure de support (21) présente un logement (51) pour un support de câble (53).

13. Nacelle (104) selon la revendication 12,
**caractérisée en ce que** la structure de support (21) présente une première extrémité côté tour et une deuxième extrémité côté interface, et que le logement pour le support de câble est disposé sur la deuxième extrémité.

14. Procédé de pose d'une ligne (5) sous tension à l'intérieur d'une nacelle (104) d'une éolienne (100), dans lequel la nacelle (104) est réalisée selon l'une quelconque des revendications précédentes et installée sur une tour (102) de l'éolienne (100), le procédé comprenant les étapes :
- de déplacement du certain nombre de galets (23) dans la première position (S1) avancée,
- d'abaissement du moyen de traction (9), dans lequel le moyen de traction (9) est guidé dans la zone de réception (31) et passe sur le certain nombre de galets (23),
- de liaison du moyen de traction (9) à la ligne (5) sous tension dans une zone à l'extérieur de la nacelle (104), notamment sous la nacelle (104), de préférence à l'intérieur de la tour,
- de traction de la ligne (5) sous tension à l'intérieur de la nacelle (104) au moyen du moyen de traction (9), dans lequel la ligne (5) est pliée à partir de la première direction d'étirement dans la deuxième direction d'étirement dans le rayon de courbure prédéterminé,
- de déplacement du certain nombre de galets (23) dans la deuxième position rétractée, dans lequel la ligne (5) est maintenue à l'état plié, et
- de liaison de la ligne (5) sous tension à l'interface électrique (3).

15. Procédé selon la revendication 14, comprenant :
- la mise en place du certain nombre de galets (23) sur la structure de support (21) avant l'abaissement du moyen de traction (9), notamment avant le déplacement du certain nombre de galets (23) dans la première position, et/ou
- le retrait du certain nombre de galets (23) à partir de la structure de support (21) après l'introduction de la ligne (5) dans la nacelle (104), notamment après le déplacement du certain nombre de galets (23) dans la deuxième position.
